# EUROPEAN PATENT APPLICATION

(11) **EP 4 043 240 A1**
(43) Date of publication of application: **17.08.2022**
(21) Application number: 20874950.7
(22) Date of filing: 15.09.2020
(51) Int. Cl.: B60C 5/01, B60C 15/04

(54) **PNEUMATIC TIRE**

(30) Priority: 08.10.2019 JP 2019185318
(71) Applicant: Sumitomo Rubber Industries, Ltd., Kobe-shi, Hyogo 651-0072 (JP)
(72) Inventor: ANDO, Kanta, Kobe-shi, Hyogo 651-0072 (JP)
(74) Representative: TBK
(86) International application number: PCT/JP2020/034953
(87) International publication number: WO 2021/070581

(57) **Abstract**

A pneumatic tire in which the production efficiency can be improved, and the material recyclability can be improved, while ensuring the fit with a rim. A pair of bead portions are each composed of an annular bead core 10 made of a thermoplastic resin, and a bead core covering portion 20 made of a thermoplastic resin.

## Description

### Technical Field

The present invention relates to a pneumatic tire in which a bead portion including a bead core is made of a thermoplastic resin.

### Background of the art

Conventional pneumatic tires have secured tire basic characteristics by using vulcanized rubber and cord materials such as organic fibers and steel fibers. However, vulcanized rubber has a problem such that it is difficult to recycle the material. In addition, the use of cord materials, especially carcass cords, has problems of complicating the manufacturing process and increasing manufacturing costs.

Therefore, Patent Document 1 below proposes a carcassless tire in which a tire framework member is made of a thermoplastic resin. The tire framework member comprises a pair of bead portions, a pair of side portions extending from the pair of bead portions, and a crown portion connecting the pair of side portions.

### Prior Art Document

### Patent Document

Patent Document 1: Japanese Patent No. 6138695

### Summary of the Invention

### Problems to be resolved by the Invention

In the tire proposed above, however, used as the bead core is a winding body of a bead cord using metal fibers such as steel fibers and organic fibers such as polyamide fibers.

Therefore, when manufacturing the tire, a step of winding the bead cord in advance to form the bead core is required, which involves a problem of lowering the production efficiency. Further, since metal fibers or the like is used for the bead cord, there is a problem such that the material recyclability cannot be sufficiently improved.

The present invention is based on that the bead portion including at least a bead core is made of a thermoplastic resin, and
a problem is to provide a pneumatic tire in which, while ensuring the fit with the rim, the production efficiency can be improved and the material recyclability can be improved.

### Means for solving the Problems

The present invention is a pneumatic tire comprising a pair of bead portions fitted onto a rim, and each of the bead portions is composed of an annular bead core made of a thermoplastic resin and a bead core covering portion made of a thermoplastic resin.

In the pneumatic tire according to the present invention, it is preferable that the tire comprises a pair of sidewall portions extending in the tire radial direction from the pair of bead portions, respectively, and an under tread portion connecting the pair of sidewall portions, and the pair of sidewall portions and the under tread portion are made of the same thermoplastic resin as, or a different thermoplastic resin from the thermoplastic resin of the bead core covering portion.

In the pneumatic tire according to the present invention, it is preferable that a ground contacting tread component is disposed on the outer side in the tire radial direction, of the under tread portion, and the ground contacting tread component is made of vulcanized rubber or a thermoplastic resin.

In the pneumatic tire according to the present invention, it is preferable that the tensile elastic modulus of the thermoplastic resin of the bead core is not less than 1000 MPa.

In the pneumatic tire according to the present invention, it is preferable that the tensile elastic modulus of the thermoplastic resin of the bead core is larger than the tensile elastic modulus of the thermoplastic resin of the bead core covering portion.

In the pneumatic tire according to the present invention, it is preferable that the tensile elastic modulus of the thermoplastic resin of the bead core covering portion is 30 to 200 MPa.

In the pneumatic tire according to the present invention, it is preferable that the bead core comprises a fibrous filler in the thermoplastic resin.

In the pneumatic tire according to the present invention, it is preferable that the filler is oriented in the tire circumferential direction.

### Effects of the Invention

In the pneumatic tire of the present invention, the pair of bead portions are each composed of the annular bead core made of the thermoplastic resin, and the bead core covering portion made of the thermoplastic resin.

Therefore, at least in the bead portion, the bead core and the bead core covering portion can be integrally formed at one time by, for example, composite molding in which the two thermoplastic resins are injected into a cavity.

That is, the step of separately forming the bead core becomes unnecessary, and the production efficiency can be improved. Further, since the thermoplastic resin is also used for the bead core, it is possible to further improve the material recyclability. In addition, the adhesiveness between the bead core and the bead core covering portion is increased, which can contribute to the improvement of bead durability.

### Brief Description of the Drawings

[FIG. 1] a cross-sectional view showing an embodiment of a pneumatic tire of the present invention.
[FIG. 2] a cross-sectional view enlargedly showing the bead portion.
[FIG. 3] a cross-sectional view enlargedly showing the tread reinforcing component.
[FIG. 4] a cross-sectional view showing another example of the tread reinforcing component.
[FIG. 5] (a) to (c) are conceptual diagrams showing a method for manufacturing the pneumatic tire.

### Mode for carrying out the Invention

Hereinafter, embodiments of the present invention will be described in detail.

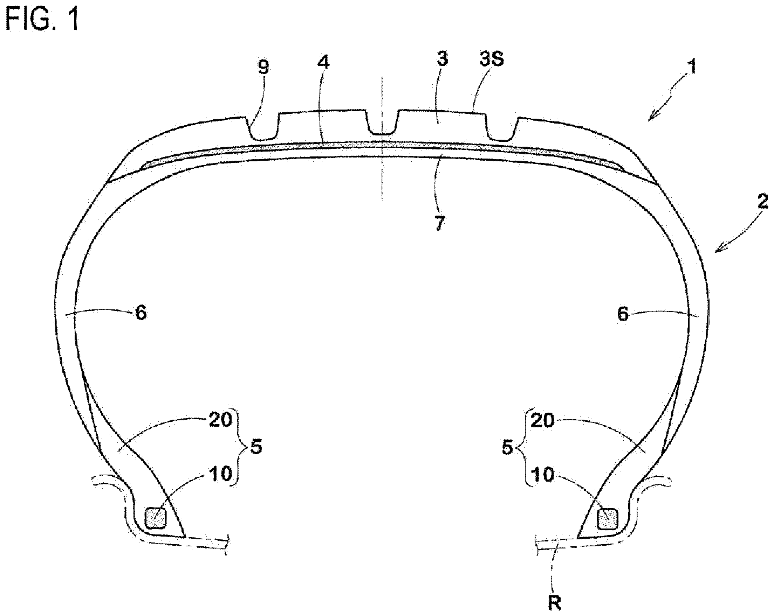

As shown in FIG. 1, a pneumatic tire 1 of the present embodiment (hereinafter, may be simply referred to as the tire 1) comprises a pair of bead portions 5, and each of the pair of bead portions 5 is composed of an annular bead core 10 made of a thermoplastic resin, and a bead core covering portion 20 made of a thermoplastic resin.

In this example, there is shown a case where the tire 1 is a tire for passenger cars. However, the present invention is not limited to this, and can be applied to tires of various categories such as for motorcycles, light trucks, large trucks and the like.

Specifically, the tire 1 comprises at least a toroidal tire framework member 2 including a pair of bead portions 5, and a ground contacting tread component 3.

The tire framework member 2 includes the pair of bead portions 5, a pair of sidewall portions 6 extending outwardly in the tire radial direction from the pair of bead portions 5, and an under tread portion 7 connecting the pair of sidewall portions 6.

The bead portion 5 is a portion which fits onto a rim R when mounted on the rim.

The sidewall portion 6 is a portion constituting the side portion of the tire 1, and extends outwardly in the tire radial direction while being curved in an arc shape which is convex toward the outside in the tire axial direction.

The under tread portion 7 is a portion that supports the ground contacting tread component 3, and connects between the outer ends in the tire radial direction, of the sidewall portions 6.

As described above, the bead portion 5 is composed of the annular bead core 10 made of the thermoplastic resin and the bead core covering portion 20 made of the thermoplastic resin.

Here, as the thermoplastic resin of the bead core 10, a resin having a tensile elastic modulus E5 larger than that of the thermoplastic resin of the bead core covering portion 20 is used.

In particular, it is preferable to use, as the thermoplastic resin of the bead core 10, a thermoplastic resin having a tensile elastic modulus E5 of not less than 1000 MPa and further not less than 5000 MPa in order to exert a fitting force with the rim R comparable with the conventional steel cord bead core.

If the tensile elastic modulus E5 exceeds 30,000 MPa, the rim mount performance tends to be impaired.

In the bead core 10, it is also preferable that the tensile strength of the thermoplastic resin is not less than 200 MPa.

The tensile elastic modulus and tensile strength are values measured according to the test method described in "Plastics - Determination of tensile properties" of JIS K7161.

It is preferable that the thermoplastic resin of the bead core 10 contains a fibrous filler. In this case, it is more preferable to orient the filler in the tire circumferential direction.

By orienting the filler in the tire circumferential direction, a strong hooping effect in the tire circumferential direction can be exerted, and the fitting force with the rim can be increased.

On the other hand, since deformation in the tire radial direction can be allowed, the effect of facilitating the mounting on a rim can be obtained. Suitable fillers include carbon fibers, glass fibers, aramid fibers, cellulose nanofibers (CNF), cellulose nanocrystals (CNC) and the like, and these can be used alone or in combination.

It is preferable that the tensile elastic modulus E3 of the thermoplastic resin of the bead core covering portion 20 is in a range of 30 to 200 MPa. By setting the tensile elastic modulus E3 to 30 MPa or more, the lateral rigidity of the tire can be secured, and excellent steering stability can be exerted.

If the tensile elastic modulus E3 exceeds 200 MPa, however, the bead portion 5 becomes too hard, which tends to deteriorate the fitability with the rim R.

In the tire 1, the sidewall portion 6 and the under tread portion 7 are also made of a thermoplastic resin. In this case, the sidewall portion 6, the under tread portion 7 and the bead core covering portion 20 may be made of a same thermoplastic resin, or may be made of different thermoplastic resins.

From the viewpoint of production efficiency, it is preferable that they are made of the same thermoplastic resin.

But, from the viewpoint of running performance, it is preferable that they are made of different thermoplastic resins.

When made of different thermoplastic resins, it is more preferable to use, as the thermoplastic resin of the sidewall portions 6 and the under tread portion 7, those having a tensile elastic modulus E2 smaller than the tensile elastic modulus E3 of the thermoplastic resin of the bead core covering portion 20. This makes it possible to achieve both steering stability and ride comfort.

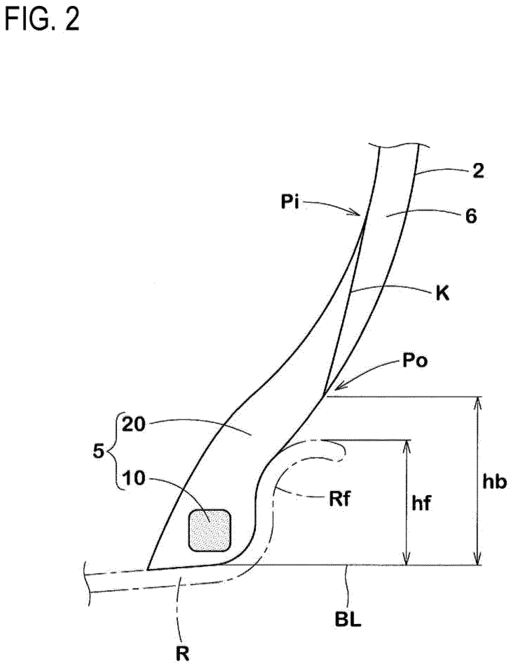

It is preferable for increasing the bond strength that the interfacial boundary K between the thermoplastic resin of the bead core covering portion 20 and the thermoplastic resin of the sidewall portion 6 is inclined with respect to the tire axial direction line, as shown in FIG. 2. In particular, it is preferable that the intersection Po of the interfacial boundary K and the outer surface of the tire framework member 2 is located inside in the tire radial direction than the intersection Pi of the interfacial boundary K and the inner surface of the tire framework member 2.

Thereby, the exposed area of the outer surface of the bead core covering portion 20 is reduced, which helps to suppress damage such as cracks due to tire deformation.

It is preferable that the height hb in the tire radial direction, of the intersection Po from the bead baseline BL is in a range of 1.0 to 3.0 times a rim flange height hf.

If less than 1.0 times, it becomes difficult to sufficiently improve the steering stability. On the contrary, if more than 3.0 times, the effect of suppressing damage such as cracks is reduced, and it is disadvantageous for the ride comfort performance.

The rim flange height hf is defined as the height in the tire radial direction, of the top of the rim flange Rf from the bead baseline BL.

As shown in FIG. 1, the ground contacting tread component 3 is disposed outside the under tread portion 7 in the tire radial direction.

In this example, there is shown a case where the tread reinforcing component 4 is further disposed between the ground contacting tread component 3 and the

The ground contacting tread component 3 is a portion for contacting with the road surface, and in the ground contacting surface 3S, tread grooves 9 for enhancing wet performance may be formed in various patterns.

The ground contacting tread component 3 can be made of vulcanized rubber or a thermoplastic resin. However, from the viewpoint of improving the material recyclability, it is preferable that the ground contacting tread component 3 is also made of a thermoplastic resin.

When a thermoplastic resin is used for the ground contacting tread component 3, it is preferable that, from the viewpoint of improving the followability to the road surface and improving the grip,
the tensile elastic modulus E1 of the thermoplastic resin of the ground contacting tread component 3 is small than the tensile elastic modulus E2 of the thermoplastic resin of the sidewall portion 6 and the under tread portion 7.

However, when the thermoplastic resin of E1 < E2 is used for the ground contacting tread component 3, there is a possibility that the tread rigidity becomes small, which reduces the stability of the ground contact shape and the steering stability.

Therefore, in the present embodiment, the under tread portion 7 is hooped by providing the tread reinforcing component 4, to stabilize the tire shape, particularly the ground contact shape.

Thereby, it becomes possible to exert excellent running performance even when a thermoplastic resin of E1 < E2 is used for the ground contacting tread component 3,

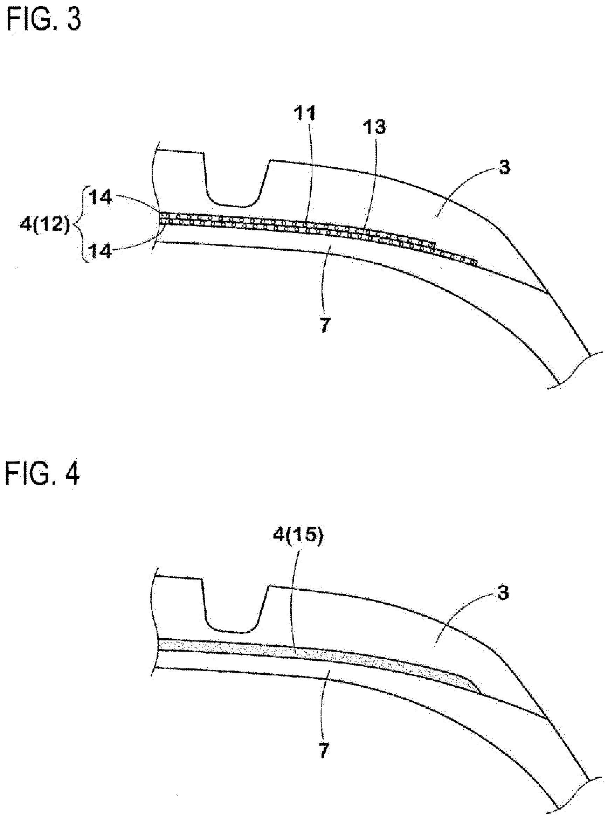

As shown in FIG. 3, the tread reinforcing component 4 in this example is formed from a cord reinforcing layer 12 in which reinforcing cords 11 are arranged.

Specifically, the cord reinforcing layer 12 is composed of at least one, for example, two reinforcing plies 14.

The reinforcing ply 14 in this example is in the form of a sheet in which an array of the reinforcing cords 11 which are arranged at an angle of, for example, 10 to 45 degrees with respect to the tire circumferential direction, is covered with a topping material 13 made of a rubber or a thermoplastic resin.

When there are a plurality of the reinforcing plies 14, it is preferable that the direction of inclination of the reinforcing cords 11 is different between the plies.

The reinforcing ply 14 may be an array of the reinforcing cords 11 spirally wound in the tire circumferential direction which is coated with the topping material 13.

As the topping material 13 of the reinforcing ply 14, a thermoplastic resin can be suitably used from the viewpoint of adhesiveness to the ground contacting tread component 3 and the under tread portion 7.

As shown in FIG. 4, the tread reinforcing component 4 may be a resin reinforcing layer 15 made of a thermoplastic resin.

In the case of the resin reinforcing layer 15, it is preferable that the thermoplastic resin contains a fibrous filler, and it is more preferable to orient the filler in the tire circumferential direction.

Suitable fillers include carbon fibers, glass fibers, aramid fibers, cellulose nanofibers (CNF), cellulose nanocrystals (CNC) and the like, and these can be used alone or in combination.

In the present application, the "thermoplastic resin" includes a thermoplastic elastomer.

The "thermoplastic resin" means a polymer compound in which the material is softened and flowable as the temperature rises, and its condition becomes relatively hard and strong when cooled.

This "thermoplastic elastomer" has the characteristics such that the material is softened and flowable as the temperature rises, and when cooled, it becomes relatively hard and strong and has rubber-like elasticity.

Considering the elasticity required during running, moldability during manufacturing and the like, a thermoplastic elastomer is preferably used for the ground contacting tread component 3, the under tread portion 7, the sidewall portions 6, and the bead core covering portion 20, and a thermoplastic resin having no rubber-like elasticity is preferably used for the bead core 10.

Examples of the thermoplastic elastomer include polyamide-based thermoplastic elastomers, polyester-based thermoplastic elastomers, polyurethane-based thermoplastic elastomers, polystyrene-based thermoplastic elastomers and polyolefin-based thermoplastic elastomers, and it is possible to use alone or in combination.

In the present application, different thermoplastic resins mean that the thermoplastic resins have compositions different from each other.

The "different compositions" include a case where the components themselves (including additives) constituting the resin material are different, and a case where the components are the same but their contained amounts are different.

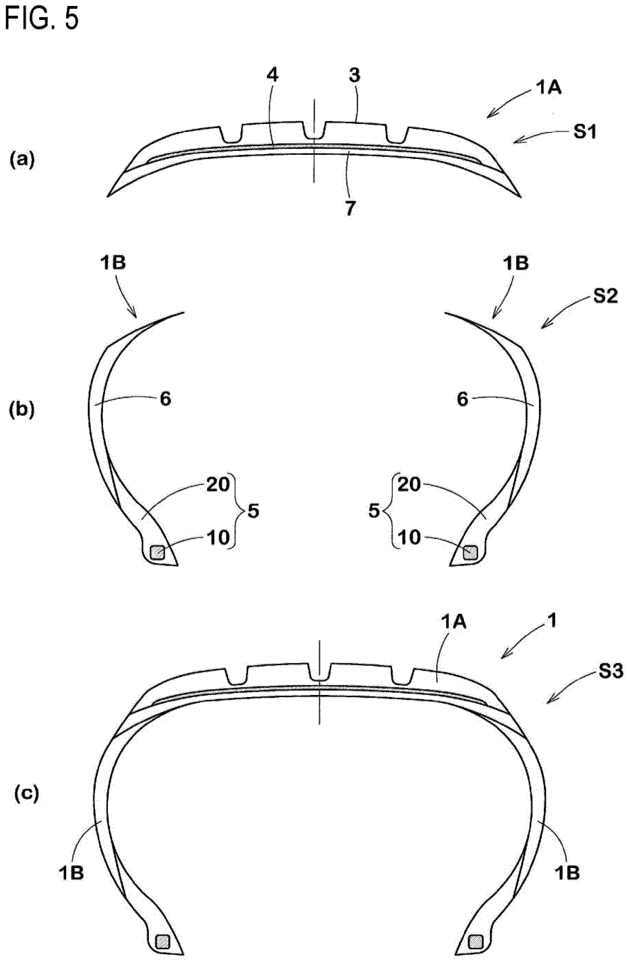

Next, an example of the manufacturing method of the tire 1 of the embodiment will be illustrated. As conceptually shown in FIG. 5, the manufacturing method in this example comprises
- step S1 of forming a first tire base 1A in which the under tread portion 7, the tread reinforcing component 4 and the ground contacting tread component 3 are integrated,
- step S2 of forming the second tire base 1B in which the sidewall portions 6, the bead core covering portion 20 and the bead core 10 are integrated, and
- step S3 of forming the tire 1 by joining the first tire base 1A and the second tire base 1B.

In the step S1, when the tread reinforcing component 4 is the cord reinforcing layer 12, after forming the cord reinforcing layer 12 in advance, the first tire base 1A is formed by performing composite molding by injecting the thermoplastic resin for the tread reinforcing component and the thermoplastic resin for the under tread portion into the cavity in which the cord reinforcing layer 12 is set.

When the tread reinforcing component 4 is the resin reinforcing layer 15, the first tire base 1A is formed by performing composite molding by injecting the thermoplastic resin for the tread reinforcing component, the thermoplastic resin for the under tread portion and the thermoplastic resin for the resin reinforcing layer into a cavity.

In the step S2, the second tire base 1B is formed by performing composite molding by injecting a thermoplastic resin for the bead core, a thermoplastic resin for the bead core covering portion, and a thermoplastic resin for the sidewall portions
into a cavity.

In the step S3, the first tire base 1A and the second tire base 1B are joined by thermal fusion bonding or using an adhesive.

As the adhesive, for example, Aron Alpha EXTRA2000 (registered trademark) manufactured by Toagosei Co., Ltd., Loctite 401J (registered trademark) manufactured by Henkel Japan Ltd., and the like are preferably used.

While detailed description has been made of an especially preferable embodiment of the present invention, the present invention can be embodied in various forms without being limited to the illustrated embodiment.

### Embodiments

In order to confirm the effects of the present invention, tires (195/65R15) for passenger cars having the structure shown in FIG. 1 were experimentally manufactured based on specifications shown in Table 1.

Then, each of the prototype tires was tested for the rim mount property, fitability (fitting force of the bead portion with the rim), and productivity.

Comparative example 1 had substantially the same structure as embodiments except that the bead core was a core formed from a steel cord.

Further, in Embodiments 1 to 6, a filler made of glass fibers was included in the bead core.

### < Rim mount property >

When the tire was mounted on a rim by the use of an automatic tire changer, the presence or absence and degree of damage such as cracks in the bead portions were visually observed.

Based on those test results, the rim mount property was evaluated into ten ranks.

The larger the index value, the better the rim assembly.

### < Fitability >

Using a bead portion expansion force tester manufactured by Hoffman, a Hoffman fitting force (unit: kN) was measured.

The measurement result is expressed by an index with the comparative example 1 as 100.

The larger the value, the larger the fitting force and the better.

### < Productivity >

The productivity of the tire is expressed by an index with the comparative example 1 as 100.

The larger the number, the better the productivity.

**[Table 1]**

| | comparative example 1 | embodiment 1 | embodiment 2 | embodiment 3 | embodiment 4 | embodiment 5 | embodiment 6 |
|---|---|---|---|---|---|---|---|
| bead core | steel | resin A | resin A | resin A | resin B | resin B | resin B |
| -filler orientation direction | - | radial direction | radial direction | circumferential direction | radial direction | radial direction | circumferential direction |
| bead core covering portion, sidewall portion, under tread portion | resin C | resin C | resin D | resin D | resin C | resin D | resin D |
| rim mount property | 10 | 8 | 8 | 10 | 8 | 8 | 10 |
| fitability | 100 | 96 | 102 | 103 | 100 | 99 | 102 |
| productivity | 10 | 12 | 12 | 12 | 12 | 12 | 12 |

The resin materials used in Table 1 are shown in Table 2.

**[Table 2]**

| resin | name | manufacturer | tensile elastic modulus (Mpa) | type |
|---|---|---|---|---|
| A | JF-30G | Toyobo | 25000 | polyamide-based thermoplastic resin |
| B | PA6-G30 | Toyobo | 6530 | polyamide-based thermoplastic resin |
| C | Elastran 1198A TR | BASF | 74.3 | polyurethane-based thermoplastic elastomer |
| D | UBESTA XPA9040 | Ube Industries | 78 | polyamide-based thermoplastic elastomer |

As shown in Table 1, it can be confirmed that the embodiments could be provided with the required rim fitability while improving the productivity.

Moreover, it can be understood that the bead core made of the thermoplastic resin, could contribute to the improvement of the material recyclability.

### Description of the signs

- 1: pneumatic tire
- 3: ground contacting tread component
- 5: bead portion
- 6: sidewall portion
- 7: under tread portion
- 10: bead core
- 20: bead core covering portion
- R: rim

## Claims

1. A pneumatic tire comprising a pair of bead portions fitted onto a rim, wherein each of the bead portions is composed of an annular bead core made of a thermoplastic resin, and a bead core covering portion made of a thermoplastic resin.

2. The pneumatic tire as set forth in claim 1, which comprises a pair of sidewall portions extending in the tire radial direction from the pair of bead portions, respectively, and an under tread portion connecting the pair of sidewall portions, wherein the pair of sidewall portions and the under tread portion are made of the same thermoplastic resin as, or a different thermoplastic resin from the thermoplastic resin of the bead core covering portion.

3. The pneumatic tire as set forth in claim 2, wherein
a ground contacting tread component is disposed on the outer side in the tire radial direction, of the under tread portion, and
the ground contacting tread component is made of vulcanized rubber or a thermoplastic resin.

4. The pneumatic tire as set forth in any one of claims 1 to 3, wherein the tensile elastic modulus of the thermoplastic resin of the bead core is not less than 1000 MPa.

5. The pneumatic tire as set forth in any one of claims 1 to 4, wherein the tensile elastic modulus of the thermoplastic resin of the bead core is larger than the tensile elastic modulus of the thermoplastic resin of the bead core covering portion.

6. The pneumatic tire as set forth in any one of claims 1 to 5, wherein the tensile elastic modulus of the thermoplastic resin of the bead core covering portion is 30 to 200 MPa.

7. The pneumatic tire as set forth in any one of claims 1 to 6, wherein the bead core comprises a fibrous filler in the thermoplastic resin.

8. The pneumatic tire as set forth in claim 7, wherein the filler is oriented in the tire circumferential direction.
